(19) Europäisches Patentamt
European Patent Office
Office européen des brevets

(11) EP 0 551 072 B1

(12) EUROPEAN PATENT SPECIFICATION

(45) Date of publication and mention
of the grant of the patent:
**18.12.1996 Bulletin 1996/51**

(51) Int Cl.6: **G11B 7/24**

(21) Application number: **93100020.2**

(22) Date of filing: **04.01.1993**

(54) **Optical Tape**

Bandförmiges optisches Aufzeichnungsmaterial

Bande optique

(84) Designated Contracting States:
**DE FR GB IT LU NL**

(30) Priority: **07.01.1992 JP 1052/92**

(43) Date of publication of application:
**14.07.1993 Bulletin 1993/28**

(73) Proprietor: **DIAFOIL HOECHST CO., LTD Bunkyo-ku Tokyo (JP)**

(72) Inventors:
 • **Tate, Masashi**
   **Yokohama-shi, Kanagawa-ken (JP)**
 • **Yoshida, Hidemi**
   **Atsugi-shi, Kanagawa-ken (JP)**

(74) Representative:
**TER MEER - MÜLLER - STEINMEISTER & PARTNER
Mauerkircherstrasse 45
81679 München (DE)**

(56) References cited:
**EP-A- 0 176 017        EP-A- 0 229 255
EP-A- 0 238 985        EP-A- 0 331 746**

 • **PATENT ABSTRACTS OF JAPAN vol. 8, no. 253 (M-339)(1690) 20 November 1984 & JP-A-59 127 730 ( TORAY ) 23 July 1984**

**Description**

The present invention relates to an optical tape in which a substrate containing a polyethylene-2,6-naphthalate layer is used.

Magnetic recording media have been generally used for information recording. However, request has risen recently for the improvement of recording density, and an optical recording and reproducing system has been proposed. As a recording medium suited for this system, there have been reported various types of optical tape such as one in which a metallic film of Te-As-Se is disposed on a plastic base film (Japanese Patent Application Laid-Open (Kokai) No. 57-33447 (1982)) and one in which a Te-Se, Se-In-Sb or Ag-Zn alloy layer is produced on a polyimide tape base by RF-magnetron sputtering, and a protective layer is further produced thereon (Japanese Patent Application Laid-Open (Kokai) No. 62-132251 (1987)).

These optical tapes are the cassette-type information recording tapes which record optically information by an analog or digital system. The cassette-type recording tapes are increased in recording density based per unit volume by the reduction of the thickness of the substrate.

With development of the optical recording and reproducing system, request is increasing for the improvement of recording density per unit volume. To meet this request, attempts are being made for reduction of thickness of the substrate.

As a result of studies for solving the said problems, it has been found that by using as a substrate containing a polyethylene-2,6-naphthalate layer, having a $F_5$ value in the longitudinal (machine) direction of not less than 196 N/mm$^2$ (20 kgf/mm$^2$), a Young's modulus in the longitudinal (machine) direction of not less than 5880N/mm$^2$ (600 kgf/mm$^2$) and a Young's modulus in the transverse direction of not less than 5880N/mm$^2$ (600 kgf/mm$^2$), and obtained by melt-extruding polyethylene-2,6-naphthalate having an intrinsic viscosity of not less than 0.40 on a casting drum to obtain an amorphous sheet and stretching the amorphous sheet at a temperature higher than the glass transition point but below the melting point of the resin, the obtained optical tape has sufficient practical strength even if the thickness of the substrate is not more than 20 μm, especially less than 10 μm and also has a high recording density per on unit volume. The present invention has been achieved on the basis of this finding.

In an aspect of the present invention, there is provided an optical tape comprising (a) a substrate which has a thickness of not more than 20 μm, satisfies the following formulae (1) to (3) and comprises a polyethylene-2,6-naphthalate layer, and whose surface on one side has center-line average roughness (Ra$^B$) of not more than 0.005 μm, and (b) an optical recording layer produced on the surface having the Ra$^B$ of not more than 0.005 μm.

$$F_5 \text{ in longitudinal (machine) direction} \geq 196 \text{ N/mm}^2 \text{ (20 kgf/mm}^2\text{)} \tag{1}$$

$$\text{Young's modulus}$$

$$\text{in longitudinal (machine) direction} \geq 5880 \text{ N/mm}^2 \text{ (600 kgf/mm}^2\text{)} \tag{2}$$

$$\text{Young's modulus}$$

$$\text{in transverse direction} \geq 5880 \text{ N/mm}^2 \text{ (600 kgf/mm}^2\text{)} \tag{3}$$

The substrate having a $F_5$ value in the longitudinal (machine) direction of not less than 196 N/mm$^2$ (20 kgf/mm$^2$), a Young's modulus in the longitudinal (machine) direction of not less than 5880 N/mm$^2$ (600 kgf/mm$^2$) and a Young's modulus in the transverse direction of not less than 5880 N/mm$^2$ (600 kgf/mm$^2$) may be only a polyethylene-2,6-naphthalate layer, but is preferably selected from those having the following constitutions.

(1) Substrate composed of a polyethylene-2,6-naphthalate layer (hereinafter, also referred to as "PEN layer") having a surface with a center-line average roughness (Ra$^B$) of not more than 0.005 μm, and a coating layer or a co-extruded polyester layer formed on one side of the PEN layer and having a surface with a center-line average roughness (Ra$^A$) of 0.005 to 0.2 μm;

(2) Substrate composed of a PEN layer having a surface with a center-line average roughness (Ra$^A$) of 0.005 to 0.2 μm, and a coating layer or a co-extruded polyester layer formed on one side of the PEN layer and having a surface with a center-line average roughness (Ra$^B$) of not more than 0.005 μm;

(3) Substrate composed of a PEN layer, a coating layer formed on one side of the PEN layer and having a surface with a center-line average roughness (Ra$^A$) of 0.005 to 0.2 µm and a co-extruded polyester layer formed on another side of the PEN layer and having a surface with a center-line average roughness (Ra$^B$) of not more than 0.005 µm; and

(4) Substrate composed of a PEN layer, a co-extruded polyester layer formed on one side of the PEN layer and having a surface with a center-line average roughness (Ra$^A$) of 0.005 to 0.2 µm and a co-extruded polyester layer produced on another side of the PEN layer and having a surface with a center-line average roughness (Ra$^B$) of not more than 0.005 µm.

The "Ra$^B$" means the center-line average roughness of the surface on which an optical recording layer is produced. The "Ra$^A$" means the center-line average roughness of the surface on the opposite side to the surface on which an optical recording layer is produced.

The "polyethylene-2,6-naphthalate layer (PEN layer)" is made from polyethylene-2,6-naphthalate in which the structural units are mostly constituted by ethylene-2,6-naphthalate. The polyethylene-2,6-naphthalate may contain a unit derived from other copolymerizable component(s) in an amount of not more than 10 mol%, preferably not more than 5 mol%.

Polyethylene-2,6-naphthalate can be produced usually by condensing naphthalene-2,6-dicarboxylic acid or a derivative thereof, for example, methyl naphthalene-2,6-dicarboxylate and ethylene glycol, together with an optional copolymerizable component(s) in the presence of a catalyst under the appropriate reaction conditions. The copolymerizable component usable in the reaction include dicarboxylic acids such as adipic acid, oxalic acid, isophthalic acid, terephthalic acid, naphthalene-2,7-dicarboxylic acid, diphenyl ether dicarboxylic acid, and lower alkyl esters thereof; oxycarboxylic acids such as p-oxybenzoic acid, p-oxyethoxybenzoic acid, and lower alkyl esters thereof; dihydric alcohol such as propylene glycol, trimethylene glycol, tetramethylene glycol, pentamethylene glycol, hexamethylene glycol and diethylene glycol; and polyalkylene glycols such as polyethylene glycol, polytetramethylene glycol. In carrying out the polymerization, it may be added a flatting agent such as titanium dioxide, a polymerization regulator, a crystallinity modifier such as higher aliphatic carboxylic acids, a plasticizer, and other additives.

The intrinsic viscosity measured in a solvent of o-chlorophenol at a temperature of 35°C, of the polyethylene-2,6-naphthalate used in the present invention is usually not less than 0.40, preferably 0.5 to 0.7, because if the polymerization degree of the polyethylene-2,6-naphthalate is too low, the produced film tends to be poor in mechanical properties.

The polyethylene-2,6-naphthalate is extruded on a casting drum to produce a sheet and the sheet is further subjected to necessary processing such as stretching, thereby obtaining a film improved in mechanical properties such as tensile strength and Young's modulus. A typical example of such processing is a successive biaxial stretching method.

According to this method, polyethylene-2,6-naphthalate is melt-extruded and quickly cooled on a casting drum to obtain an amorphous sheet. The amorphous sheet is stretched, preferably 2.5 to 5.0 times, in the machine direction by rolls at a temperature of above a glass transition point of the polyethylene-2,6-naphthalate, preferably between the temperature of 10°C higher than a secondary transition point of the polyethylene-2,6-naphthalate and 170°C, more preferably 125 to 150°C. Then the sheet is stretched, preferably 2.5 to 4.5 times, in the transverse direction by a tenter under heating at a temperature same as in the case of stretching in the machine direction, preferably between the temperature of 3°C higher than the secondary transition point and 160°C, and then, if necessary, subjected to a heat-set. Thereafter, the thus obtained sheet is again stretched (preferably 1.1 to 2.0 times at 50 to 200°C) in the machine direction by a roll stretcher and then re-stretched (preferably 1.05 to 2.5 times at 120 to 180°C) in the transverse direction by a tenter, followed by heat-setting (preferably at 160 to 250°C) in the tenter. By the abovementioned process, a polyethylene naphthalate film having excellent mechanical properties in both machine and transverse directions can be produced.

The PEN layer having a surface with a center-line average roughness (Ra$^A$) of 0.005 to 0.2 µm may be produced, for example, by adding to polyethylene-2,6-naphthalate, organic or inorganic particles having an average particle size of 0.05 to 5 µm in an amount of 0.05 to 10% by weight based on the polyethylene-2,6-naphthalate.

The PEN layer having a surface with a center-line average roughness (Ra$^B$) of not more than 0.005 µm is usually substantially free of particles. The term of "substantially free of particles" means that the material contains particles having a particle size of not less than 0.25 µm in an amount of not more than 0.05% by weight based on the polyethylene-2,6-naphthalate. The PEN layer can be produced by using polyethylene-2,6-naphthalate obtained by using an ester exchanging catalyst such as a magnesium compound, manganese compound or zinc compound and preventing deposition of a catalyst residue by a phosphorus compound, or obtained by a direct polymerization process in which an esterifying catalyst is not used.

The co-extruded polyester layer may be produced by co-extruding a polyester with the polyethylene-2,6-naphthalate. The coating layer may be obtained by coating the amorphous sheet of polyethylene-2,6-naphthalate, or the monoaxially stretched or biaxially stretched sheet in the above-mentioned method. Typically, the coating layer is obtained by coating the monoaxially stretched sheet and stretching the coating sheet.

The density of the PEN layer used in the present invention is usually not less than 1.360, preferably 1.370 to 1.400. If the density is less than 1.360, the dimensional stability of the film tends to be deteriorated. For maintaining the dimensional stability of the film, it should be so made that the heat shrinkage after 30-minute standing at 150°C may be less than 5% preferably less than 3%, more preferably less than 2%, in both machine and transverse directions. This can be accomplished by, for example, giving a relaxation to the film in the course of heat-setting.

The substrate used in the present invention has the $F_5$ value in the longitudinal direction of the substrate is not less than 196 N/mm$^2$ (20 kgf/mm$^2$), the Young's modulus in the longitudinal direction of the substrate is not less than 5880 N/mm$^2$ (600 kgf/mm$^2$), preferably not less than 6860 N/mm$^2$ (700 kgf/mm$^2$), more preferably 7350 N/mm$^2$ to 15680 N/mm$^2$ (750 to 1,600 kgf/mm$^2$), and the Young's modulus in the transverse direction of the substrate is not less than 5880 N/mm$^2$ (600 kgf/mm$^2$), preferably not less than 6370 N/mm$^2$ (650 kgf/mm$^2$), more preferably 6860 N/mm$^2$ to 10 760 N/mm$^2$ (700 to 1,200 kgf/mm$^2$).

If the $F_5$ value is less than 196 N/mm$^2$ (20kgf/mm$^2$), the Young's modulus in the longitudinal and/or transverse direction is less than 5880 N/mm$^2$ (600 kgf/mm$^2$), the produced tape may be too low in stiffness, and it tends to cause trouble in the tape running system and may become poor in durablity against the repeated runs in the case that the substrate is thin.

In the present invention, it is preferable to use a base film which falls within the above-defined ranges of $F_5$ value in the longitudinal direction and Young's moduli in the longitudinal and transverse directions.

The thickness of the substrate used in the present invention is not more than 20 μm, preferably not less than 3 μm and less than 10 μm. The thickness of the base film used in the present invention is usually not more than 3 μm and less than 10 μm.

As the coating layer and the co-extruded polyester layer formed on the PEN layer in the present invention, there can be used, for instance, (i) a coating layer (A) and a co-extruded polyester layer (A) having a surface with center-line average roughness (Ra) of 0.005 to 0.2 μm, or (ii) a co-extruded polyester layer (B) having a surface with center-line average roughness (Ra) of not more than 0.005 μm.

[A] The coating layer (A) used in the present invention is composed of a resin binder and a lubricant. Although various known methods are usable for forming the coating layer, it is preferred to employ a method in which a lubricant and a resin binder are dispersed in water or an organic solvent to prepare a coating solution and the prepared coating solution is applied to the surface of the PEN layer, and dried.

As the lubricant, particles, lubricating materials, and vertical protuberance-forming resins are usable.

As the particles usable as the lubricant in present invention, inorganic particles such as alumina, silica, titanium oxide, kaolin, molybdenum sulfide and the like; polymer particles such as polyester, polyamide, polyacrylate, polysulfone, polyphenylene oxide, polyimide, epoxy resin, crosslinked styrene resin, crosslinked acryl resin, crosslinked benzoguanamine resin, crosslinked melamine resin and the like; carbon particles; and particles of metallic alkoxide hydrolyzates may be exemplified. The average particles size thereof is preferably 0.005 to 2 μm, more preferably 0.01 to 0.5 μm. If the particle size is too small, the particles tend to aggregated with each other, thereby making it difficult to effect dispersion or to produce the desired lubricating effect. On the other hand, if the particle size is too large, it is difficult to disperse the particles and tends to cause fall-off of the particles from the coat. The shape of the particles may be spherical, oval or flat. Agglomerates of particles may be included.

The lubricating materials usable as the lubricant in present invention include anionic surfactants, cationic surfactants, ampholytic surfactants, noninonic surfactants, fluorine-based surfactants, organic carboxylic acids and their derivatives, higher aliphatic alcohols, paraffin, waxes, polyolefins, silicone compounds and the like. Of these materials, polyolefin or silicone compounds are preferred.

As the polyolefin lubricants, waxes, resins or rubber-like materials composed of a homopolymer or copolymer of 1-olefinic unsaturated hydrocarbons such as ethylene, propylene, 1-butene, 4-methyl-1-pentene, etc., for example, polyethylene, polypropylene, poly-1-butene, poly-4-methyl-1-pentene, ethylene-propylene copolymer, ethylene-1-butene copolymer, propylene-1-butene copolymer, etc.; aliphatic dicarboxylic acids such as azelaic acid, sebacic acid, etc.; and oxycarboxylic acids such as oxybenzoic acid and ester forming derivatives thereof may be exemplified.

As the silicone-compound lubricants, unmodified silicones such as dimethylpolysiloxane, and silicones modified with a polar group such as fatty acids, polyethers, alcohols, and alkyl group may be exemplified. Silicones modified with the polar group have good affinity for binder resins.

The "vertical protuberance-forming resins" refer to the compounds affecting a phase separation or stretching characteristics in the layer. Some methods of forming the protuberances by using these compounds are described below. In a coating method, a coating solution containing a water-soluble polymer such as, specifically, cellulose, gelatin, polyacrylic acid and its salts, polystyrenesulfonic acid and its salts, is coated on a polyester film in the course of the film forming process and the coated film is stretched. It is possible to employ other methods as well.

It is possible to use two or more of the said lubricants in admixture. Also, joint use of particles and lubricant materials, lubricant materials and vertical protuberances-forming resins, and vertical protuberances-forming resins and particles, is effective for the purpose of present invention.

The lubricant, when applied, is dispersed with a resin binder in water or an organic solvent.

The content of the lubricant in the coating layer is in the range of 0.5 to 40% by weight, preferably 1 to 20 % by weight. When the lubricant content is too small, the obtained coating layer (A) may not be provided with the desired slipperiness. On the other hand, when the lubricant content is too large, the coating film strength may lower.

As the resin binders used in the present invention, polyesters, polyamides, polystyrenes, polycarbonates, polyarylates, polyacrylates, polyvinyl chloride, polyvinylidene chloride, polyvinyl butyral, polyvinyl alcohol, phenoxy resins, polyimides, epoxy resins, polyurethanes, silicon resins, etc., and the copolymers of the monomers constituting the said resins and mixture thereof may be exemplified.

Among these resins, urethane resins, polyesters and resins using urethane resins or polyesters as a skeleton resin are preferable.

The urethane resins are composed of, for example, the following polyols, polyisocianates, chain-lengthening materials and crosslinking agents.

As the polyols, polyethers such as polyoxyethylene glycol, polyoxypropylene glycol and polyoxytetramethylene glycol, polyesters such as polyethylene adipate, polyethylene-butylene adipate and polycaprolactone, acrylic polyols and castor oil may be exemplified.

As the polyisocyanates, tolylene diisocyanate, phenylene diisocyanate, 4,4'-diphenylmethane diisocyanate, hexamethylene diisocyanate, xylylene diisocyanate, 4,4'-dicyclohexylmethane diisocyanate and isophorone diisocyanate may be exemplified.

Examples of chain-lengthening materials or crosslinking agents are ethylene glycol, propylene glycol, diethylene glycol, trimethylolpropane, hydrazine, ethylenediamine, diethylenetriamine, 4,4'-diaminophenylmethane, 4,4'-diaminodicyclohexylmethane and water.

As the components forming the polyesters, the following polycarboxylic acid and polyhydroxy compound may be exemplified.

As the polycarboxylic acid, terephthalic acid, isophthalic acid, orthophthalic acid, phthalic acid, 4,4'-diphenyldicarboxylic acid, 2,5-naphthalenedicarboxylic acid, 2,6-naphthalenedicarboxylic acid, 1,4-cyclohexanedicarboxylic acid, 2-potassium sulfoterephthalate, 5-sodium sulfoisophthalate, adipic acid, azelaic acid, sebacic acid, dodecanedicarboxylic acid, trimellitic acid, trimesic acid, trimellitic anhydride, phthalic anhydride, p-hydroxybenzoic acid, trimellitric acid monopotassium salt and the ester-forming derivatives thereof may be exemplified.

As the polyhydroxy compound, ethylene glycol, 1,2-propylene glycol, 1,3-propylene glycol, 1,3-propanediol, 1,4-butanediol, 1,6-hexanediol, 2-methyl-1,5-pentanediol, neopentyl glycol, 1,4-cyclohexanedimethanol, p-xylylene glycol, bisphenol A-ethylene glycol additives, diethylene glycol, triethylene glycol, polyethylene glycol, polypropylene glycol, polytetramethylene glycol, polytetramethyleneoxide glycol, dimethylolpropionic acid, glycerin, trimethylolpropane, sodium dimethylolethyl sulfonate and potassium dimethylolpropionate may be exemplified.

At least one compound is selected from each of the groups, and the selected compounds are synthesized by ordinary polycondensation to produce the polyesters.

The polyesters in the present invention also includes composite high-molecular compounds having a polyester component such as an acrylic-grafting polyester and polyester polyurethane obtained by chain-lengthening a polyester polyol which are described in Japanese Patent Application Laid-Open (KOKAI) No. 1-165633(1989).

It is preferred in the coating solution used in the present invention that water is used as a medium from the viewpoint of safety and hygiene. The coating solution may also contain an organic solvent as an assistant of such resins within the scope of the present invention. When water is used as a medium, the coating solution may be obtained by forcibly dispersing such resin by a surfactant or the like, but it is preferably a self-dispersion-type resin having a hydrophilic nonionic component such as a polyether or a cationic group such as a quaternary ammonium salt, more preferably a water-soluble or water-dispersible resin having an anionic group.

The water-soluble or water-dispersible resin having an anionic group of the present invention is obtained by copolymerizing or grafting the said resin as a skeleton resin with compounds having an anionic group. As the anionic group, sulfonic acid, carboxylic acid, phosphoric acid and a salt thereof are preferable. In order to impart a water solubility to the resin, as the counter ions to the anionic group are used alkali metal ions (lithium ion, sodium ion or potassium ion), or ammonium ion. The amount of anionic group in the water-soluble or water-dispersible resin having the anionic group is preferably 0.05 to 8 wt%. If the anionic group content is less than 0.05 wt%, the water solubility or water dispersibility of the resin is sometimes lowered. On the other hand, if the anionic group content exceeds 8 wt%, the water resistance of the coating layer is sometimes lowered.

As the polyesters of the water-soluble or water-dispersible resins used in the present invention, polyesters having Tg of not more than 80°C, preferably 0 to 70°C; more preferably polyesters having sulfonate ($-SO_3M$) group; still more preferably polyesters wherein an acidic moiety contains 1 to 10 mol% of sulfo aromatic dicarboxylic acid unit or salts thereof unit; most preferably polyesters wherein an acidic moiety contains 1 to 10 mol% of sulfoisophthalic acid unit or salts thereof unit, are preferred.

As the urethane resins of the water-soluble or water-dispersible resins used in the present invention, urethane resins having carboxylic acid group (-COOH) or salts thereof as a hydrophilic group; more preferably urethane resins wherein a polyol moiety contains not less than 50 mol%, preferably not less than 70 mol% of polyester polyol unit; still more preferably urethane resins wherein a isocyanate moiety contains not less than 50 mol%, preferably not less than 70 mol% of aromatic diisocyanate unit and/or isophorone diisocyanate unit, are preferred.

An amount of the resin binders in the coating layer is 60 to 99.5 wt%, preferably 70 to 90 wt%.

In order to improve the sticking property (blocking property), water resistance, solvent resistance and mechanical strength of the coating layer, the coating solution used in the present invention may contain, as crosslinking agent, methylol urea compounds, alkylol urea compounds, melamine compounds, guanamine compounds, acrylamide compounds, polyamide compounds, epoxy compounds, aziridine compounds, block polyisocyanates, silane coupling agents, titanium coupling agents, zirco-aluminate type coupling agents, peroxides, heat and light reactive compounds, photosensitive resins or the like.

The coating solution may further contain, if necessary, a defoaming agent, a coatability-improving agent, a thickening agent, an antistatic agent, an organic lubricant, an antioxidant, an UV absorber, a foaming agent, a dye, a pigment and other additives.

As methods of applying the above-described coating solution to the polyester film, there are a method of applying the coating solution by using a reverse roll coater, gravure coater, rod coater, air doctor coater or another coating equipment as described in "Coating method" by Yuzi Harasaki, published by Maki Shoten, 1979, before, between or after the stretching steps, and a method of applying the coating solution by using the above-described coating equipments in the process of producing the biaxially stretched film, is preferred. As a method of applying the coating solution in the process of producing the biaxially stretched film, a method of applying the coating solution to an un-stretched film and successively or simultaneously biaxially stretching the film; a method of applying the coating solution to a uniaxially stretched film and stretching the resultant film in the direction perpendicular to the uniaxial direction; and a method of applying the coating solution to a biaxially stretched film and further stretching the resultant film in the transverse and/or machine direction(s) can be cited.

The thickness of the coating layer (A) is preferably 0.01 to 3 $\mu$m, more preferably 0.02 to 1 $\mu$m.

The term of "co-extruded polyester layer" means a layer produced simultaneously with the PEN layer by co-extrusion. The polyester layer co-extruded with the PEN layer is usaully a co-extruded polyester layer containing a lubricant.

The co-extruded polyester layer (A) whose main constituent is polyethylene-2,6-naphthalate, is preferred in view of re-use of the polyethylene-2,6-naphthalate.

As the components of such a polyester, there can be used various polyvalent carboxylic acids and polyvalent hydroxyl compounds. As the polyvalent carboxylic acids, terephthalic acid, isophthalic acid, orthophthalic acid, phthalic acid, 4,4'-diphenyldicarboxylic acid, 2,5-naphthalenedicarboxylic acid, 2,6-naphthalenedicarboxylic acid, 1,4-cyclohexanedicarboxylic acid, 2-potassium sulfo terephthalic acid, 5-sodium sulfo isophthalic acid, adipic acid, azelaic acid, sebacic acid, dodecanedicarboxylic acid, glutaric acid, succinic acid, trimellitic acid, trimesic acid, trimellitic acid anhydride, phthalic anhydride, p-hydroxybenzoic acid, trimellitic acid monopotassium salts and their ester-forming derivatives may be exemplified. As the polyvalent hydroxyl compounds, ethylene glycol, 1,2-propylene glycol, 1,3-propylene glycol, 1,3-propanediol, 1,4-butanediol, 1,6-hexanediol, 2-methyl-1,5-pentanediol, neopentyl glycol, 1,4-cyclohexanedimethanol, p-xylene glycol, bisphenol A-ethylene glycol additive, diethylene glycol, triethylene glycol, polyethylene glycol, polypropylene glycol, polytetramethylene glycol, polytetramethylene oxide glycol, dimethylolpropionic acid, glycerin, trimethylolpropane, sodium dimethylolethylsulfonate and potassium dimethylolpropionate may be exemplified.

One or more of the said carboxylic acids and one or more of the said hydroxyl compounds are selected and subjected to an ordinary polycondensation reaction, thereby obtaining a polyester.

The "polyesters" referred to in the present invention include the compounds having polyester units. As examples of the compounds having polyester units, the composite polymers such as polyester polyurethane obtained by chain-lengthening a polyester polyol with an isocyanate compound, polyester-polyacryl copolymer, etc., can be mentioned.

As the lubricant to be contained in the said polyester, the particles, the lubricating materials and the vertical protuberance-forming resins mentioned above can be used. The average particle size of the lubricant particles is preferably 0.05 to 2 $\mu$m.

In the case of using the vertical protuberance-forming resin in the coextrusion method, a polyester and a polyolefin having poor affinity for the polyester are mixed and melt-extruded, and the extruded sheet is stretched at least monoaxially.

The lubricant content in the polyester is preferably 0.001 to 30 wt%, more preferably 0.005 to 10 wt%.

The thickness of the co-extruded polyester layer (A) of the substrate according to the present invention is usually 0.1 to 5 $\mu$m, preferably 0.2 to 1 $\mu$m.

The co-extruded polyester layer may be one composed of a crystalline polyester.

The crystalline polyester used in the present invention is a polymer obtained by polycondensing an aromatic dicarboxylic acid such as terephthalic acid, naphthalene-2,6-dicarboxylic acid or the like and an aliphatic glycol such as ethylene glycol, diethylene glycol, tetramethylene glycol, neopentyl glycol or the like. Typical examples of such polymers are polyethylene terephthalate (PET) and polyethylene-2,6-naphthalate. As the crystalline polyester, homopolymers thereof as well as polymers obtained by copolymerizing other aromatic or aliphatic dicarboxylic acid with diol in an amount not affecting the crystallinity, for example, not more than 10 mol%, preferably not more than 5 mol%. It is possible to blend other polymers such as polyamides, polyolefins, polycarbonates, etc., in an amount not more than 10 wt%. However, the blending amount should be made within limits not causing excessive deterioration of crystallinity or excessive roughening of the film surface.

The center line average roughness ($Ra^A$) on the surface of the substrate of the optical tape according to the present invention is within the range of 0.005 to 0.2 $\mu$m. When the $Ra^A$ is less than 0.005 $\mu$m, it is difficult that the slipperiness of the substrate is improved sufficiently, resulting in unsatisfactory workability of the substrate in wind-up and unwinding thereof. On the other hand, when the $Ra^A$ exceeds 0.2 $\mu$m, there may be induced transfer of roughness to the smooth surface of the substrate.

[B] The co-extruded polyester layer (B) used in the present invention is substantially free of particles like the previously described film. Preferably, the co-extruded polyester layer is composed of polyethylene-2,6-naphthalate. The thickness of the co-extruded polyester layer (B) is usually 0.01 to 5 $\mu$m, preferably 0.2 to 1 $\mu$m.

As the optical recording layer formed on the base film in the present invention, any of a write-once recording layer capable of recording only for once and a rewritable recording layer capable of repeating writing can be used. As the rewritable type, a magneto-optic recording medium utilizing a magneto-optic effect or a phase-change medium utilizing a reversible change between a crystalline phase and an amorphous phase can be mentioned. The optical recording layer of the present invention is composed of a dielectric layer, a recording layer and a reflective layer. The rewritable recording media comprise a layer constitution of substrate / dielectric layer / recording layer / dielectric layer / reflecting layer in the case of conducting the recording/reproducing of information by the irradiation of laser beam on the side of the base film, or comprise a layer constitution of substrate / reflecting layer / dielectric layer / recording layer / dielectric layer in the case of irradiating the laser beam on the side of the optical recording layer.

The dielectric layer is used for a purpose of protecting a recording layer from a ready oxidation by moisture or oxygen and for a purpose of preventing a deformation of the recording layer, and usually, a transparent and high heat-resistant metal oxide, metal nitride, metal sulfide, inorganic carbide, etc. may be used.

As the metal oxide, metal oxides such as $Al_2O_3$, $Ta_2O_5$, SiO, $SiO_2$ and a mixture thereof, and composite oxides such as Al-Ta-O may be exemplified. Further, to the above-mentioned compounds, other elements, for example, Ti, Zr, Mo and Y in the form of an oxides alone or in combination with Al or Ta may be added. Since such metal oxides have a dense structure, they can prevent an infiltration of moisture or oxygen from the outside, have a high corrosion-resistance, and are less reactive with the magneto-optical recording layer or the phase change recording layer and excellent in adhesion with the resin.

As the metal nitrides, nitrides of metals such as Si, Al and Ge, composite nitrides of two or more of them and composite oxides thereof with Nb and Ta (for example, SiNbN, SiTaN) may be exemplified. Among them, Si-containing nitrides show more excellent effect. The metal nitrides.are dense, can prevent an infiltration of moisture or oxygen from the outside and have a high corrosion-resistance.

As the metal sulfides, ZnS and a mixture with the above-mentioned metal oxide or metal nitride may be exemplified.

As the inorganic carbides, SiC or the like can be mentioned.

In the present invention, tantalum oxide ($Ta_2O_5$) and zinc sulfide (ZnS) are more preferred since they cause less cracking.

A preferred thickness of the dielectric layer is about from 50 to 300 nm (500 to 3,000 Å) for the dielectric layer on the side of the substrate and about 10 to 300 nm (100 to 3,000 Å) on the side of the reflecting layer (outer side).

For the recording layer of the rewritable recording medium, there can be used alloys of rare earth elements and transition metals, for example, magneto-optical recording materials such as TbFeCo, GdTbFe, GdTbFeCo, GdDyFeCo and NdDyFeCo or phase-change recording materials such as Ge-Te alloys, Ge-Sb-Te alloys and In-Sb-Te alloys.

For the recording layer of the write-once recording medium, there can be used Te compounds such as Te-C, $TeO_x$, Te-CS2, Te-Sb, Te-Se-Te-Bi double layers and Te-Se, and organic photochromics.

The thickness of the recording layer is preferably within a range from 10 to 200 nm (100 to 2,000 Å).

The thicknesses of the recording layer and the dielectric layer are selected so that the absorption efficiency for the laser beam is high, and the amplitude of recording signals, that is, the contrast between the recording state and the unrecording state is increased in view of the interference effect caused by multilayered constitution.

As the reflecting layer, a thin film of metal such as Al, Au, Ag and Ni having a high reflectance is usually used. The reflecting layer also has an effect of promoting the diffusion of heat-energy absorbed in the recording layer. The thickness of the reflecting layer is preferably within a range from 20 to 300 nm (200 to 3,000 Å). Further, a resin protecting layer composed of a UV-ray curable resin may be formed on the reflecting layer.

The recording layer, dielectric layer and reflecting layer are formed by a known vacuum thin-film forming method, for example, a vacuum-vapor deposition method, ion plating method or sputtering method. The sputtering method is recommended, particularly, with a view point of easy control of the composition and thickness. The thickness of the recording layer or the like to be formed can be controlled by monitoring using a thickness gage such as a quartz oscillator as a known technique.

An optical tape having a back-coating layer disposed by a known means on the side of the optical recording medium opposite to the vapor deposition surface thereof is more preferred. As the material of the back-coating layer, ones described in Japanese Patent Application Laid-Open (KOKAI) No. 62-245523 or USP 4,427,738 may be used.

The back-coating layer may be formed before the formation of the optical recording layer, but it is more preferable to form the layer after the formation of the optical recording layer.

The optical tape of this invention has enough strength to stand practical use even when the thickness of the substrate is less than 20 $\mu$m, preferably not less than 3 $\mu$m and less than 10 $\mu$m. The present optical tape also has excellent running quality and information recording and reproducing performance. It is further featured by large recording area per unit housing volume.

EXAMPLES

The present invention will hereinafter be described more particularly by referring to the following examples. It is to be understood, however, that these examples are given for the purpose of illustration only and in no way intended to be limiting the scope of the invention.

In the following Examples and Comparative Examples, all "parts" are by weight unless otherwise noted.

(1) Center Line Average Roughness (Ra)

The center line average roughness on the surface of the substrate was determined as follows by using a surface roughness apparatus (SE-3F) [manufactured by Kosaka Institute Co.]. That is, a portion of a sampling length L (2.5 mm) was sampled in the direction of the center line from a film cross sectional curve. A value given by the following formula is represented by "$\mu$m" when expressing the roughness curve: y = f(x), indicating the center line for the sampled portion on the x-axis and the direction of the longitudinal stretching on the y-axis. The center line average roughness (Ra) is represented by determining ten cross sectional curves from the surface of the specimen film and expressed by an average value for the center line roughness of the sampled portion determined from the cross sectional curves. Further, the tip radius of the stylus was 2 $\mu$m, the load was 30 mg and the cut-off value was 0.08 mm.

$$Ra = 1/L \int_{0}^{L} | f(x) | dx$$

(2) Tensile Test (F$_5$ value)

A specimen substrate of 50 mm in length and 15 mm in width was pulled at a rate of 50 mm/min in a room adjusted to a temperature of 23°C and a humidity of 50% RH by using a tensilon tester Intesco Model 2001 (manufactured by Intesco Co.), and the strength at 5% elongation was defined as F$_5$ value.

(3) Young's modulus

A 300 mm long and 20 mm wide sample film was pulled at a straining rate of 10%/min in a chamber controlled to 23°C and 50% RH, by using a tensile tester INTESCO MODEL 2001 (mfd. by Intesco Co., Ltd.), and Young's modulus was calculated from the following formula by using the initial rectilinear section of the tensile stress-strain curve.

$$E = \Delta\sigma/\Delta\varepsilon$$

(wherein E represents Young's modulus N/mm$^2$ (kgf/mm$^2$); $\Delta\sigma$ represents a difference in stress due to the original average sectional area between the two points on the straight line; and $\Delta\varepsilon$ represents a difference in strain between said two points).

## Example 1

Preparation of polyethylene-2,6-naphthalate One hundred (100) parts of dimethyl naphthalene-2,6-dicarboxylate, 60 parts of ethylene glycol and 0.1 part of calcium acetate monohydrate were mixed and subjected to an ester exchange reaction in a reactor. The reaction initiating temperature was set at 180°C, and the reaction temperature was raised gradually as methanol was distilled away. The temperature reached 230°C four hours after start of the reaction, at which point the ester exchange reaction

was substantially completed. Then 0.04 parts of phosphoric acid was added, followed by further addition of 0.04 parts of antimony trioxide, and the mixture was subjected to a polycondensation reaction in the usual way. The temperature was raised gradually while the pressure was reduced gradually so that 2 hours after start of the reaction, the temperature reached 290°C and the pressure reached 40,0 Pascal (0.3 mmHg).

At a point when 4 hours had passed after start of the reaction, the reaction was terminated and polyethylene-2,6-naphthalate was discharged out under nitrogen pressure. The molten polymer was passed through a filter, extruded into strands and cut into chips to prepare the polymer material. The thus obtained polyethylene-2,6-naphthalate had an intrinsic viscosity of 0.68.

### Production of substrate

The polyethylene-2,6-naphthalate was dried, extruded into the form of sheet at 295°C and made into an amorphous sheet on a casting drum by using an electrostatic pinning method. The obtained amorphous sheet was stretched 3.0 times in the longitudinal direction at 135°C and then one side of the sheet was coated with an aqueous coating composition composed of 95 parts of a water-soluble polyester containing 92 mol% of terephthalic acid and 8 mol% of sodiumsulphoisophthalic acid as carboxylic acid moiety and 75 mol% of ethylene glycol and 25 mol% of diethylene glycol as glycol moiety, 5 parts of silica sol having an average particle size of 0.07 $\mu$m and 1,900 parts of water. The coated sheet was stretched 4.0 times in the transverse direction at 140°C, further stretched 1.8 times in the machine direction at 160°C, additionally stretched 1.1 time in the transverse direction at 220°C, then heat set at 230°C with tentering, then cooled and wound up while giving a 4% relaxation in both machine and transverse directions in the course of cooling. The discharge rate was adjusted so that the final film thickness of the substrate would become 4.5 $\mu$m.

### Production of optical tape

On the non-coated side of the substrate, there were formed successively a 100 nm (1,000 Å) thick Al reflective layer, a 150 nm (1,500 Å) thick $Ta_2O_5$ dielectric layer, a 70 nm (700 Å) thick $Ge_{22}Sb_{28}Te_{50}$ (atom%) recording layer and a 110 nm (1,100 Å) thick $Ta_2O_5$ dielectric layer by sputtering in vacuo in a same chamber to make a phase changeable recording medium. The phase changeable recording medium was let run at a linear velocity of 4 m/s and irradiated with semiconductor laser light via the recording layer to record a signal of 1 MHz. There was obtained a good C/N ratio over 50 dB. Also, this recording medium was capable of overwrite.

### Example 2

On the optical recording layer side of the substrate obtained in Example 1, there were formed successively a 100 nm (1,000 Å) thick Al reflective layer, a 90 nm (900 Å) thick $Ta_2O_5$ dielectric layer, a 40 nm (400 Å) thick $Tb_{22}Fe_{70}Co_8$ (atom%) recording layer and a 75 nm (750 Å) thick $Ta_2O_5$ dielectric layer by sputtering in vacuo in a same chamber to make a magneto-optical recording medium.

This magneto-optical recording medium, after blanket erase with an electromagnet, was let run at a linear velocity of 4 m/s and exposed to semiconductor laser light via the recording layer while applying a biased magnetic field of 200 Oe to record a signal of 1 MHz. There was obtained a good C/N over 50 dB.

### Example 3

The polyethylene-2,6-naphthalate obtained in Example 1 (material A) and a material obtained by mixing in the material A 0.1% by weight of silica particles having an average particle size of 0.15 $\mu$m as measured by a centrifugal sedimentation method and kneading the mixture by a double-screw kneader (material B) were extrude by a co-extrusion so that the ratio of thickness of the material A layer to the material B layer would become 8:1, and the extrudate was cooled rapidly to obtain an amorphous sheet. This amorphous sheet was subjected to the same stretching and heat treating steps as in Example 1 (excepting the coating step after stretching in the longitudinal direction) to obtain a 4.5 $\mu$m thick substrate.

On the material A side of this film were formed a reflective layer, dielectric layers and a recording layer in the same way as Example 1 to make an optical tape. This optical tape was let run at a linear velocity of 4 m/s and exposed to semiconductor laser light via the recording a signal of 1 MHz. The optical tape had a good C/N ratio above 50 dB and was also capable of overwrite.

The properties of the optical tapes obtained in Examples 1-3 described above are shown collectively in Table 1.

Examples 4 to 7

The optical tapes were produced in the same way as Example 1 changing polyethylene-2,6-naphthalate layer, coating layer (A), coextruded polyester layer (A), coating layer (B) and coextruded polyester layer (B) as shown in Table 1. The properties of the obtained substrate are also shown in Table 1.

On each of the smoother surfaces of the obtained substrates were formed a reflective layer, dielectric layers and a recording layer in the same way as Example 1 to make an optical tape. The obtained optical tapes were let run at a linear velocity of 4 m/s and exposed to semiconductor laser light via the recording a signal of 1 MHz. All of the optical tapes had a good C/N ratio above 50 dB and were also capable of overwrite.

Table 1

| | Poly-ethylene-2,6-naphthalate (PEN) layer (thickness: μm) | Coating layer (A) (thickness: μm) | Co-extruded polyester layer (A) (thickness: μm) | Co-extruded polyester layer (B) (thickness: μm) | Thickness of substrate (μm) | $Ra^A$ (nm) | $Ra^B$ (nm) | $F_5$ in longitudinal direction in N/mm$^2$ (kgf/mm$^2$) | Young's modulus in N/mm$^2$ (kgf/mm$^2$) | |
|---|---|---|---|---|---|---|---|---|---|---|
| | | | | | | | | | Longi-tudinal | Trans-verse |
| Example 1 | PEN-1 (4.4) | A-1 (0.06) | - | - | 4.5 | 6 | 2 | 206 (21) | 8036 (820) | 7252 (740) |
| Example 2 | PEN-1 (4.4) | A-1 (0.06) | - | - | 4.5 | 6 | 2 | 206 (21) | 8036 (820) | 7252 (740) |
| Example 3 | PEN-1 (4.0) | - | PEN-2 (0.5) | - | 4.5 | 7 | 3 | 206 (21) | 8036 (820) | 7252 (740) |
| Example 4 | PEN-2 (4.0) | - | - | PEN-1 (0.5) | 4.5 | 6 | 2 | 206 (21) | 8134 (820) | 7252 (740) |
| Example 6 | PEN-1 (3.9) | A-1 (0.06) | - | PEN-1 (0.5) | 4.5 | 7 | 2 | 206 (21) | 8134 (820) | 7252 (740) |
| Example 7 | PEN-1 (3.5) | - | PEN-2 (0.5) | PEN-1 (0.5) | 4.5 | 6 | 2 | 206 (21) | 8036 (820) | 7252 (740) |

Note:

PEN-1: Polyethylene-2,6-naphthalate (intrinsic viscosity: 0.68) substantially free of particles.

A-1: 95 parts of a water-soluble polyester containing 92 mol% of terephthalic acid and 8 mol% of sodiumsulphoisophthalic acid as carboxylic acid moiety and 75 mol% of ethylene glycol and 25 mol% of diethylene glycol as glycol moiety and 5 parts of silica sol having an average particle size of 0.07 μm.

PEN-2: PEN-1 with 0.1% by weight based on PEN-1, of silica particles having an average particle size of 0.15 μm.

PEN-3: PEN-1 with 0.1% by weight based on PEN-1, of silica particles having an average particle size of 0.22 μm.

## Claims

1. An optical tape comprising (a) a substrate which has a thickness of not more than 20 μm, satisfies the following formulae (1) to (3), and comprises a polyethylene-2,6-naphthalate layer, and whose surface on one side has center-line average roughness ($Ra^B$) of not more than 0.005 μm, and (b) an optical recording layer produced on the surface having the $Ra^B$ of not more than 0.005 μm.

$$F_5 \text{ in longitudinal (machine) direction} \geq 196 \text{ N/mm}^2 \text{ (20 kgf/mm}^2\text{)} \qquad (1)$$

$$\text{Young's modulus}$$
$$\text{in longitudinal (machine) direction} \geq 5880 \text{ N/mm}^2 \text{ (600 kgf/mm}^2\text{)} \qquad (2)$$

$$\text{Young's modulus}$$
$$\text{in transverse direction} \geq 5880 \text{ N/mm}^2 \text{ (600 kgf/mm}^2\text{)} \qquad (3)$$

2. An optical tape according to claim 1, wherein the thickness is not less than 3 μm and less than 10 μm.

3. An optical tape according to claim 1, wherein the Young's modulus in the longitudinal direction is not less than 6860 N/mm$^2$ (700 kgf/mm$^2$).

4. An optical tape according to claim 1, wherein the Young's modulus in the transverse direction is not less than 6370 N/mm$^2$ (650 kgf/mm$^2$).

5. An optical tape according to claim 1, wherein the substrate is composed of a polyethylene-2,6-naphthalate layer having a surface with a center-line average roughness (Ra$^B$) of not more than 0.005 μm, and a coating layer or a co-extruded polyester layer formed on one side of the polyethylene-2,6-naphthalate layer and having a surface with a center-line average roughness (Ra$^A$) of 0.005 to 0.2 μm

6. An optical tape according to claim 1, wherein the substrate is composed of a polyethylene-2,6-naphthalate layer having a surface with a center-line average roughness (Ra$^A$) of 0.005 to 0.2 μm, and a coating layer or a co-extruded polyester layer formed on one side of the the polyethylene-2,6-naphthalate layer and having a surface with a center-line average roughness (Ra$^B$) of not more than 0.005 μm

7. An optical tape according to claim 1, wherein the substrate is composed of a polyethylene-2,6-naphthalate layer, a coating layer formed on one side of the polyethylene-2,6-naphthalate layer and having a surface with a center-line average roughness (Ra$^A$) of 0.005 to 0.2 μm and a co-extruded polyester layer formed on another side of the polyethylene-2,6-naphthalate layer and having a surface with a center-line average roughness (Ra$^B$) of not more than 0.005 μm

8. An optical tape according to claim 1, wherein the substrate is composed of a polyethylene-2,6-naphthalate layer, a co-extruded polyester layer formed on one side of the polyethylene-2,6-naphthalate layer and having a surface with a center-line average roughness (Ra$^A$) of 0.005 to 0.2 μm and a co-extruded polyester layer formed on another side of the polyethylene-2,6-naphthalate layer and having a surface with a center-line average roughness (Ra$^B$) of not more than 0.005 μm.

**Patentansprüche**

1. Optisches Band, umfassend (a) ein Substrat, das eine Dicke von nicht mehr als 20 μm aufweist. den folgenden Formeln (1) bis (3) genügt und eine Polyethylen-2,6-naphthalatschicht umfaßt, und dessen Oberfläche auf einer Seite eine Mittellinien-Durchschnittsrauhigkeit (Ra$^B$) von nicht mehr als 0.005 μm besitzt, und (b) eine optische Aufzeichnungsschicht, die auf der Oberfläche mit der Ra$^B$ von nicht mehr als 0,005 μm gebildet ist;

$$F_5 \text{ in Längs(Maschinen)-Richtung} \geq 196 \text{ N/mm}^2 \text{ (20 kgf/mm}^2\text{)} \tag{1}$$

$$\text{Young-Modul in Längs(Maschinen)-Richtung} \geq 5880 \text{ N /mm}^2 \text{ (600 kgf/mm}^2\text{)} \tag{2}$$

$$\text{Young-Modul in Querrichtung} \geq 5880 \text{ N/mm}^2 \text{ (600 kgf/mm}^2\text{)} \tag{3}$$

2. Optisches Band nach Anspruch 1, wobei die Dicke nicht mehr als 3 μm und weniger als 10 μm beträgt.

3. Optisches Band nach Anspruch 1, wobei der Young-Modul in der Längsrichtung nicht weniger als 6860 N/mm$^2$ (700 kgf/mm$^2$) beträgt.

4. Optisches Band nach Anspruch 1, wobei der Young-Modul in der Querrichtung nicht weniger als 6370 N/mm$^2$ (650 kgf/mm$^2$) beträgt.

5. Optisches Band nach Anspruch 1, wobei das Substrat aus einer Polyethylen-2,6-naphthalatschicht mit einer Oberfläche mit einer Mittellinien-Durchschnittsrauhigkeit (Ra$^B$) von nicht mehr als 0,005 μm und einer Überzugsschicht oder einer koextrudierten Polyesterschicht, die auf einer Seite der Polyethylen-2,6-naphthalatschicht gebildet ist, und eine Oberfläche mit einer Mittellinien-Durchschnittsrauhigkeit (Ra$^A$) von 0,005 bis 0,2 μm aufweist, zusamengesetzt ist.

6. Optisches Band nach Anspruch 1, wobei das Substrat aus einer Polyethylen-2,6-naphthalatschicht mit einer Oberfläche mit einer Mittellinien-Durchschnittsrauhigkeit (Ra$^A$) von 0,005 bis 0,2 µm und einerÜberzugsschicht oder einer koextrudierten Polyesterschicht, die auf einer Seite der Polyethylen-2,6-naphthalatschicht gebildet ist und eine Oberfläche mit einer Mittellinien-Oberflächenrauhigkeit (Ra$^B$) von nicht mehr als 0.005 µm aufweist, zusammengesetzt ist.

**7.** Optisches Band nach Anspruch 1. wobei das Substrat aus einer Polyethylen-2.6-naphthalatschicht, einer Überzugsschicht, die auf einer Seite der Polyethylen-2,6-naphthalatschicht gebildet ist und eine Oberfläche mit einer Mittellinien-Durchschnittsrauhigkeit (Ra$^A$) von 0,005 bis 0,2 µm aufweist, und einer koextrudierten Polyesterschicht, die auf einer anderen Seite der Polyethylen-2,6-naphthalatschicht gebildet ist und eine Oberfläche mit einer Mittellinien-Durchschnittsrauhigkeit (Ra$^B$) von nicht mehr als 0.005 µm aufweist, zusammengesetzt ist.

**8.** Optisches Band nach Anspruch 1, wobei das Substrat aus einer Polyethylen-2,6-naphthalatschicht, einer koextrudierten Polyesterschicht, die auf einer Seite der Polyethylen-2,6-naphthalatschicht gebildet ist und eine Oberfläche mit einer Mittellinien-Durchschnittsrauhigkeit (Ra$^A$) von 0,005 bis 0,2 µm aufweist und einer koextrudierten Polyesterschicht, die auf einer anderen Seite der Polyethylen-2,6-naphthalatschicht gebildet ist und eine Oberfläche mit einer Mittellinien-Durchschnittsrauhigkeit (Ra$^B$) von nicht mehr als 0.005 µm aufweist, zusammengesetzt ist.

## Revendications

**1.** Une bande optique comprenant (a) un substrat qui a une épaisseur d'au plus 20 µm, satisfait aux formules (1) à (3) suivantes et comprend une couche de poly-2,6-naphtalate d'éthylène, et dont la surface de l'une des faces présente une rugosité moyenne par rapport à la ligne centrale (Rm$^B$) d'au plus 0,005 µm, et (b) une couche d'enregistrement optique formée sur la surface ayant la Rm$^B$ d'au plus 0,005 µm ;

$$F_5 \text{ dans la direction longitudinale (machine)} \geq 196 \text{ N/mm}^2 \text{ (20 kgf/mm}^2\text{)} \tag{1}$$

$$\text{Module de Young dans la direction longitudinale (machine)} \geq 5880 \text{ N/mm}^2 \text{ (600 kgf/mm}^2\text{)} \tag{2}$$

$$\text{Module de Young dans la direction transversale} \geq 5880 \text{ kgf/mm}^2 \text{ (600 kgf/mm}^2\text{)} \tag{3.}$$

**2.** Une bande optique selon la revendication 1, dans laquelle l'épaisseur est d'au moins 3 µm et inférieure à 10 µm.

**3.** Une bande optique selon la revendication 1, dans laquelle le module de Young dans la direction longitudinale est d'au moins 6860 N/mm$^2$ (700 kgf/mm$^2$).

**4.** Une bande optique selon la revendication 1, dans laquelle le module de Young dans la direction transversale est d'au moins 6370 N/mm$^2$ (650 kgf/mm$^2$).

**5.** Une bande optique selon la revendication 1, dans laquelle le substrat est composé d'une couche de poly-2,6-naphtalate d'éthylène ayant une surface dont la rugosité moyenne par rapport à la ligne centrale (Rm$^B$) est d'au plus 0,005 µm, et d'une couche de revêtement ou d'une couche de polyester coextrudé formée sur une face de la couche de poly-2,6-naphtalate d'éthylène et ayant une surface dont la rugosité moyenne par rapport à la ligne centrale (Rm$^A$) est de 0,005 à 0,2 µm.

**6.** Une bande optique selon la revendication 1, dans laquelle le substrat est composé d'une couche de poly-2,6-naphtalate d'éthylène ayant une surface dont la rugosité moyenne par rapport à la ligne centrale (Rm$^A$) est de 0,005 à 0,2 µm et d'une couche de revêtement ou d'une couche de polyester coextrudé formée sur une face de la couche de poly-2,6-naphtalate d'éthylène et ayant une surface dont la rugosité moyenne par rapport à la ligne centrale (Rm$^B$) est d'au plus 0,005 µm.

**7.** Une bande optique selon la revendication 1, dans laquelle le substrat est composé d'une couche de poly-2,6-naphtalate d'éthylène, d'une couche de revêtement formée sur une face de la couche de poly-2,6-naphtalate d'éthylène et ayant une surface dont la rugosité moyenne par rapport à la ligne centrale (Rm$^A$) est de 0,005 à 0,2 μm et d'une couche de polyester coextrudé formée sur l'autre face de la couche de poly-2,6-naphtalate d'éthylène et ayant une surface dont la rugosité moyenne par rapport à la ligne centrale (Rm$^B$) est d'au plus 0,005 μm.

8. Une bande optique selon la revendication 1, dans laquelle le substrat est composé d'une couche de poly-2,6-naphtalate d'éthylène, d'une couche de polyester coextrudé formée sur une face de la couche de poly-2,6-naphtalate d'éthylène et ayant une surface dont la rugosité moyenne par rapport à la ligne centrale (Rm$^A$) est de 0,005 à 0,2 μm et d'une couche de polyester coextrudé formée sur l'autre face de la couche de poly-2,6-naphtalate d'éthylène et ayant une surface dont la rugosité moyenne par rapport à la ligne centrale (Rm$^B$) est d'au plus 0,005 μm.